# EUROPÄISCHE PATENTSCHRIFT

(11) **EP 3 599 353 B1**
(45) Veröffentlichungstag und Bekanntmachung des Hinweises auf die Patenterteilung: **27.09.2023**
(21) Anmeldenummer: 19187573.1
(22) Anmeldetag: 22.07.2019
(51) Int. Cl.: F01N 3/023, F01N 9/00

(54) **VERFAHREN ZUR REGENERATION EINES PARTIKELFILTERS IN DER ABGASANLAGE EINES OTTOMOTORS**
METHOD FOR REGENERATING A PARTICLE FILTER IN THE EXHAUST SYSTEM OF A GASOLINE ENGINE
PROCÉDÉ DE RÉGÉNÉRATION D'UN FILTRE À PARTICULES DANS LE SYSTÈME D'ÉCHAPPEMENT D'UN MOTEUR A ESSENCE

(30) Priorität: 24.07.2018 DE 102018117843
(43) Veröffentlichungstag der Anmeldung: 29.01.2020
(73) Patentinhaber: Volkswagen AG, 38440 Wolfsburg (DE)
(72) Erfinder: Heinken, Sebastian, 38106 Braunschweig (DE); Thaler, Tim, 30161 Hannover (DE); Misiek, Pierre, 31303 Burgdorf (DE); Steinbrecher, Christian, 23970 Wismar (DE)
(74) Vertreter: Gulde & Partner

(56) Entgegenhaltungen:
- DE-A1-102012 022 153
- DE-A1-102013 220 881
- DE-A1-102015 015 794
- DE-A1-102016 101 105
- DE-A1-102016 122 025

## Beschreibung

Die Erfindung betrifft ein Verfahren zur Regeneration eines Partikelfilters in der Abgasanlage eines Ottomotors gemäß dem Oberbegriff des unabhängigen Patentanspruchs. Die Erfindung betrifft ferner ein Kraftfahrzeug mit einem Ottomotor und einem in der Abgasanlage des Ottomotors angeordneten Partikelfilter zur Durchführung eines solchen Verfahrens.

Zukünftige Abgasgesetzgebungen stellen hohe Anforderungen an motorische Rohemissionen und an die Abgasnachbehandlung von Verbrennungsmotoren. Mit Einführung der nächsten Abgasgesetzgebungsstufe "EU6" wird auch für Ottomotoren ein Grenzwert für die emittierte Partikelanzahl vorgeschrieben. Dies kann dazu führen, dass in einigen Modellen der Einsatz eines Partikelfilters nötig sein wird, um diese nächste Abgasgesetzgebung zu erfüllen. Im Fahrbetrieb wird ein solcher Ottopartikelfilter mit Ruß beladen. Damit der Abgasgegendruck nicht zu stark ansteigt, muss dieser Ottopartikelfilter kontinuierlich oder periodisch regeneriert werden. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt. Darüber hinaus ist es bekannt, die Schubphasen eines Ottomotors zu nutzen, in welchen eine Kraftstoffeinspritzung in die Brennräume des Verbrennungsmotors ausgeblendet ist, um den zur Regeneration des Partikelfilters notwendigen Sauerstoff bereitzustellen. Damit die katalytische Reinigung des Abgases betriebssicher funktioniert und das An- und Abschalten der motorischen Verbrennung möglichst emissionsfrei abläuft, ist eine geringe Luftmenge im Schubbetrieb notwendig. Damit wird zum einen erreicht, dass der Katalysator weniger stark auskühlt, zum anderen ermöglicht die geringe Schubluftmenge eine verbesserte Aufnahme der motorischen Verbrennung nach einer Schubphase, wenn eine entsprechend geringe Kraftstoffmenge in die Brennräume eindosiert werden kann. Die geringe Schubluftmenge verhindert jedoch einen nennenswerten Abbrand von Ruß auf dem Partikelfilter, der für eine schnelle und effiziente Regeneration des Filters unabdingbar ist.

Aus der DE 10 2010 044 102 A1 ist ein Verfahren zur Regeneration eines Partikelfilters in der Abgasanlage eines Ottomotors bekannt, wobei durch einen Verdichter Sekundärluft verdichtet wird und über ein Flatterventil in die Abgasanlage stromaufwärts des Partikelfilters eingebracht wird. Dabei kann das Flatterventil blockiert werden, um einen unerwünschten Sauerstoffeintrag in die Abgasanlage zu verhindern und einen unkontrollierten Rußabbrand auf dem Partikelfilter zu vermeiden.

Aus der DE 10 2012 022 153 A1 ist ein Verfahren zur Regeneration eines Partikelfilters in der Abgasanlage eines Ottomotors bekannt, bei welchem eine Drosselvorrichtung im Ansaugtrakt geöffnet wird, um den für die Regeneration des Partikelfilters notwendigen Sauerstoff bereitzustellen. Alternativ ist vorgesehen, dass das Verbrennungsluftverhältnis in Richtung mager verstellt wird, um den zur Regeneration des Partikelfilters notwendigen Sauerstoff bereitzustellen.

Die DE 10 2015 108 224 A1 offenbart ein Abgasnachhandlungssystem für einen Ottomotor mit einem Partikelfilter, wobei eine Regeneration des Partikelfilters im Schubbetrieb des Verbrennungsmotors vorgeschlagen wird. Dabei wird über eine Abgasklappe die zurückgeführte Abgasmenge über die Niederdruck-Abgasrückführung geregelt, um den Sauerstoffgehalt im Abgas in einer Schubphase des Verbrennungsmotors zu steuern.

Die DE 10 2016 101 105 A1 offenbart einen Verbrennungsmotor mit einer Abgasanlage, in welcher ein Partikelfilter angeordnet ist, sowie ein Verfahren zur Regeneration eines Partikelfilters in der Abgasanlage eines Verbrennungsmotors. Ein Modus zum Aktivieren eines vergrößerten Sauerstoffstroms kann selbst bei einer geringen Last erlauben, dass eine Partikelfilterregeneration stattfindet. Eine Kraftstoffabschaltung im Schubbetrieb (Decelerated Fuel Shut-Off, DFSO) deaktiviert eine Kraftstoffeinspritzung in einen oder mehrere Zylinder eines Motors, wohingegen ein Luftstrom noch erlaubt ist, wodurch eine Sauerstoffkonzentration in einem Abgas vergrößert wird, das zudem Partikelfilter strömt. Dadurch ist eine erleichterte Regeneration des Partikelfilters möglich.

Nachteilig an den bekannten Lösungen ist jedoch, dass die Schubluftmenge in den bekannten Verfahren begrenzt wird, um einen unkontrollieren Rußabbrand auf dem Partikelfilter zu vermeiden. Dabei wird die Schubluft derart stark gedrosselt, dass sich relativ lange Zeiträume für die Regeneration des Partikelfilters ergeben. Zudem kann die geringe Schubluftmenge dazu führen, dass die Temperatur des Partikelfilters unter eine zur Oxidation des Rußes notwendige Regenerationstemperatur fällt, sodass die Regeneration zum Stillstand kommt und zusätzliche Heizmaßnahmen eingeleitet werden müssen, um den Partikelfilter wieder auf die Regenerationstemperatur aufzuheizen.

Der Erfindung liegt nun die Aufgabe zugrunde, die Heizphasen bei der Regeneration eines Partikelfilters zu verkürzen und die Effizienz des Regerationsprozesses zu verbessern.

Erfindungsgemäß wird diese Aufgabe durch ein Verfahren zur Regeneration eines Partikelfilters in einer Abgasanlage eines Verbrennungsmotors gemäß Anspruch 1 gelöst, wobei der Partikelfilter in einer Schubphase des Verbrennungsmotors regeneriert wird.

Grundsätzlich ist es, wie bereits in der Einleitung beschrieben, technisch sinnvoll, die Schubluftmenge möglichst gering zu halten, um die Grundemissionen des Verbrennungsmotors zu reduzieren und ein Auskühlen der Abgasnachbehandlungskomponenten unter ihre Light-Off-Temperatur zu verhindert. Für eine temporär anliegende Regeneration des Partikelfilters ist es jedoch förderlich, diese Schubluftmenge anzuheben, damit der Rußabbrand auf dem Partikelfilter schneller und nachhaltiger erfolgen kann. Durch eine Anpassung der Schubluftmenge während der Regeneration des Partikelfilters kann die Abbrandgeschwindigkeit des Rußes auf dem Partikelfilter gesteuert werden. Nach Abschluss der Partikelfilterregeneration wird die Schubluftmenge wieder reduziert, um die technischen Vorteile einer geringen Schubluftmenge zu nutzen. Somit kann gegenüber den aus dem Stand der Technik bekannten Verfahren eine schnellere Regeneration des Partikelfilters im Schubbetrieb durchgeführt werden. Die Verkürzung der Regenerationszeit führt dazu, dass der Partikelfilter mit innermotorischen oder externen Heizmaßnahmen weniger lange geheizt werden muss, wodurch der Kraftstoffbedarf für den Verbrennungsmotor sinkt. Ferner können die StickoxidEmissionen des Verbrennungsmotors vermindert werden, da die Abgasanlage weniger lange mit einem Luftüberschuss betrieben wird, bei welchem kein Reduktionsmittel für Stickoxide vorliegt.

Durch die in den abhängigen Ansprüchen genannten Merkmale sind vorteilhafte Weiterentwicklungen und Verbesserungen des im unabhängigen Anspruch genannten Verfahrens möglich.

Erfindungsgemäß ist vorgesehen, dass die Schubluftmenge über eine Veränderung der Stellung der Drosselklappe erhöht wird. Durch eine Veränderung der Stellung der Drosselklappe kann auf entsprechend einfache Art und Weise mit bereits vorhandenen Komponenten des Ansaugtraktes beziehungsweise des Verbrennungsmotors eine Anpassung der Schubluftmenge erfolgen. Somit sind keine zusätzlichen Komponenten notwendig, wodurch das erfindungsgemäße Verfahren im Wesentlichen kostenneutral durchgeführt werden kann.

Erfindungsgemäß ist dabei vorgesehen, dass die Drosselklappe im Schubbetrieb so weit geöffnet wird, dass ein maximaler Rußumsatz auf dem Partikelfilter erreicht wird. Um den Rußumsatz im Schubbetrieb des Verbrennungsmotors zu erhöhen, wird die Drosselklappe geöffnet, wodurch die Luftmenge, welche über die Brennräume in die Abgasanlage eingetragen wird, erhöht wird. Dadurch wird mehr Frischluft zur Oxidation des im Partikelfilter zurückgehaltenen Rußes bereitgestellt, wodurch die Regeneration des Partikelfilters beschleunigt wird. Ferner steigt mit der Umsatzgeschwindigkeit des Rußes die Temperatur des Partikelfilters, sodass auf innermotorische Heizmaßnahmen oder ein externes Heizen verzichtet werden kann. Alternativ kann die Heizleistung entsprechend reduziert werden.

Erfindungsgemäß ist vorgesehen, dass die Schubluftmenge durch ein Öffnen der Drosselklappe erhöht wird, wenn der Partikelfilter eine untere Schwellentemperatur erreicht. Damit eine effiziente Regeneration des Partikelfilters möglich ist, und den im Partikelfilter zurückgehaltenen Ruß zu oxidieren, ist neben einem Sauerstoffüberschuss in der Abgasanlage auch eine hinreichend hohe Temperatur notwendig. Um zu vermeiden, dass die Schubluftmenge erhöht wird, ohne dass der im Partikelfilter zurückgehaltene Ruß oxidiert werden kann, wird das Verfahren nur dann durchgeführt, wenn die entsprechende Temperatur des Partikelfilters erreicht ist.

Erfindungsgemäß liegt die untere Schwellentemperatur im Bereich von 550°C - 600°C. Die untere Schwellentemperatur sollte so gewählt sein, dass eine effektive und effiziente Oxidation von Ruß im Partikelfilter möglich ist, jedoch auch verhindert, dass es zu einer thermischen Schädigung des Partikelfilters kommt. Da die zur Regeneration des Partikelfilters notwendige Mindesttemperatur bei etwa 550°C bis 600°C liegt, eignet sich diese Regenerationstemperatur besonders gut als untere Schwellentemperatur.

Erfindungsgemäß ist vorgesehen, dass die Schubluftmenge durch ein Schließen der Drosselklappe verringert wird, wenn der Partikelfilter eine obere Schwellentemperatur erreicht hat. Durch die Definition einer oberen Schwellentemperatur kann verhindert werden, dass eine hohe Frischluftmenge in den Partikelfilter eingebracht wird, wenn der Partikelfilter bereits heiß ist und eine thermische Schädigung des Partikelfilters durch einen unkontrollierten Rußabbrand droht. Die obere Schwellentemperatur liegt dabei im Bereich von 800°C bis 900°C. Wird die Schubluftmenge in diesem Bereich wieder reduziert, kann ein weiteres Erhitzen des Partikelfilters vermieden werden, sodass eine thermische Schädigung oder Zerstörung des Partikelfilters verhindert wird.

In einer bevorzugten Ausführungsform des Verfahrens ist vorgesehen, dass die Regeneration des Partikelfilters in mehreren Teilschritten durchgeführt wird. In der Regel ist eine einzelne Schubphase zeitlich nicht lang genug, um eine vollständige Regeneration eines Partikelfilters in nur einer Schubphase zu erreichen. Daher ist es sinnvoll und erwünscht, die Regeneration des Partikelfilters in mehreren Teilschritten durchzuführen, bis der Partikelfilter vollständig regeneriert ist.

Bevorzugt ist dabei, wenn zwischen den Teilschritten jeweils Heizphasen für den Partikelfilter vorgesehen sind. Um ein Auskühlen des Partikelfilters zwischen zwei Regenerationsphasen zu vermeiden, kann es notwendig sein, eine Heizphase zwischen zwei aufeinander folgenden Schubphasen durchzuführen. In der Regel führt eine Schubphase zu einem Auskühlen der Abgasanlage und der darin angeordneten Abgasnachbehandlungskomponenten. Um die Regenerationstemperatur des Partikelfilters aufrecht zu halten und den Partikelfilter so zu konditionieren, dass in einer nächsten Schubphase eine Oxidation der Rußpartikel möglich ist, kann durch innermotorische oder externe Heizmaßnahmen Energie in die Abgasanlage eingebracht werden, um die Temperatur des Partikelfilters oberhalb der Regenerationstemperatur zu halten.

Besonders bevorzugt ist dabei, wenn der Verbrennungsmotor zwischen zwei Schubphasen in einem gefeuerten Betrieb betrieben wird. Eine einfache Möglichkeit, eine Heizphase zwischen zwei Schubphasen durchzuführen, besteht darin, den Verbrennungsmotor in einem gefeuerten Normalbetrieb, vorzugsweise mit einem stöchiometrischen Verbrennungsluftverhältnis, zu betreiben. Dadurch kann bei einer Entdrosselung der Schubluft vermieden werden, dass es zu einem Temperaturanstieg über eine kritische Grenztemperatur kommt, da durch den stöchiometrischen Betrieb des Verbrennungsmotors dem Abgas der Sauerstoff entzogen wird und der Rußabbrand auf dem Partikelfilter zum Erliegen kommt. Die Entdrosselung kann dabei anhand eines im Steuergerät des Verbrennungsmotors abgelegten Berechnungsmodells erfolgen, mit welcher die Temperatur des Partikelfilters berechnet wird. Erfindungsgemäß ist vorgesehen, dass die Temperatur des Partikelfilters durch einen hochdynamische Temperaturmessung an mehreren Messpunkten des Partikelfilters erfolgt und die Schubluftmenge anhand der gemessenen Temperaturen geregelt wird. Alternativ kann eine gefeuerte Betriebsphase des Verbrennungsmotors genutzt werden, um den Partikelfilter wieder auf seine Regenerationstemperatur aufzuheizen, wenn diese durch die äußeren Bedingungen unter die zur Oxidation des im Partikelfilters zurückgehaltenen Rußes abgesunken ist.

In einer weiteren Verbesserung des Verfahrens ist vorgesehen, dass der gefeuerte Betriebspunkt innermotorische Heizmaßnahmen umfasst. Durch innermotorische Heizmaßnahmen kann ein Auskühlen des Partikelfilters auch bei vergleichsweise niedrigen Lasten des Verbrennungsmotors verhindert werden. Insbesondere können die innermotorischen Heizmaßnahmen solange aufrecht erhalten bleiben, bis der Partikelfilter vollständig regeneriert ist.

Besonders bevorzugt ist dabei, wenn die innermotorischen Heizmaßnahmen eine Zündverstellung des Zündzeitpunktes der Zündkerzen in Richtung spät oder einen Lambda-Split-Betrieb umfassen. Eine einfache Möglichkeit, die Abgastemperatur des Verbrennungsmotors anzuheben, besteht darin, den Zündzeitpunkt des Gemischs in den Brennräumen des Verbrennungsmotors in Richtung spät zu verschieben. Dies führt zwar kurzfristig zu einer Verschlechterung des thermischen Wirkungsgrades und zu einem Kraftstoff-Mehrverbrauch, jedoch erhöht sich die in die Abgasanlage eingetragene Wärmemenge, sodass ein Auskühlen des Partikelfilters vermieden wird. Alternativ ist es möglich, bei einem Mehrzylindermotor einzelne Brennräume mit einen unterstöchiometrischen Verbrennungsluftverhältnis und andere Brennräume mit einem überstöchiometrischen Verbrennungsluftverhältnis zu betreiben, sodass unverbrannte Kraftstoffbestandteile aus den unterstöchiometrisch betriebenen Brennräumen mit dem Restsauerstoff aus den überstöchiometrisch betriebenen Brennräumen in der Abgasanlage exotherm reagieren und somit die Abgastemperatur angehoben wird.

In einer alternativen Ausführungsform des Verfahrens ist vorgesehen, dass der Partikelfilter ein elektrische Heizelement umfasst oder dem Partikelfilter ein elektrisches Heizelement vorgeschaltet ist, wobei das elektrische Heizelement während der Regeneration des Partikelfilters aktiviert wird, um ein Auskühlen des Partikelfilters im Schubbetrieb unter eine Regenerationstemperatur zu unterbinden. Durch elektrische Heizelemente in der Abgasanlage, insbesondere einen elektrisch beheizbaren Katalysator oder einen elektrisch beheizbaren Partikelfilter, kann die Temperatur des Partikelfilters ebenfalls bis auf eine Regenerationstemperatur angehoben werden.

Erfindungsgemäß wird ein Kraftfahrzeug mit einem Verbrennungsmotor mit einem Luftversorgungssystem, in dem in einem Ansaugkanal eine Drosselklappe angeordnet ist sowie mit einer Abgasanlage, in welcher ein Partikelfilter angeordnet ist, vorgeschlagen. Der Verbrennungsmotor ist mit einem Motorsteuergerät verbunden, welches dazu eingerichtet ist, ein erfindungsgemäßes Verfahren durchzuführen, wenn ein maschinenlesbarer Programmcode durch das Motorsteuergerät ausgeführt wird. Bei einem solchen Kraftfahrzeug ist es möglich, in einer Schubphase des Verbrennungsmotors ein erfindungsgemäßes Verfahren zur Regeneration des Partikelfilters durchzuführen, um eine effiziente und effektive Regeneration des Partikelfilters zu erreichen. Dabei kann sowohl die Regenerationszeit des Partikelfilters verringert werden als auch die Zeiten, in denen eine Beheizung des Partikelfilters notwendig ist. Auf diese Weise kann der Kraftstoffverbrauch gegenüber den aus dem Stand der Technik bekannten Verfahren reduziert werden. Parallel können die Emissionen des Verbrennungsmotors, insbesondere die Stickoxidemissionen, verringert werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Verbrennungsmotor mit einem Luftversorgungssystem und einer Abgasanlage;
- Figur 2: ein weiteres Ausführungsbeispiel eines Verbrennungsmotors mit einem Luftversorgungssystem und einer Abgasanlage; und
- Figur 3: ein Ablaufdiagramm zur Durchführung eines erfindungsgemäßen Verfahrens zur Regeneration eines Partikelfilters in der Abgasanlage des Verbrennungsmotors.

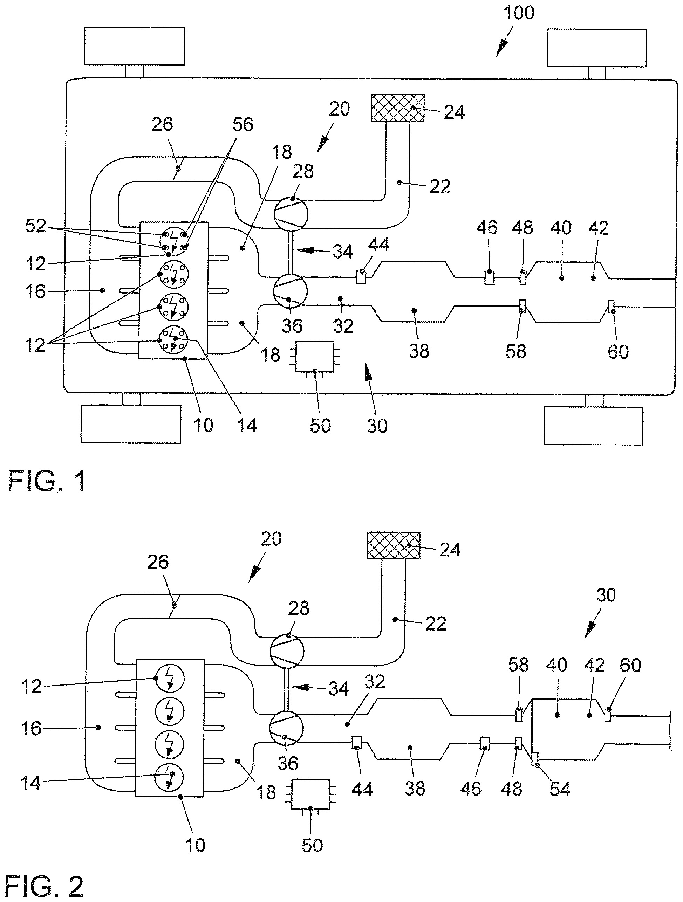

Figur 1 zeigt eine schematische Darstellung eines Kraftfahrzeuges 100, welches von einem Verbrennungsmotor 10 angetrieben wird. Der Verbrennungsmotor 10 umfasst eine Mehrzahl von Brennräumen 12, in welchen ein Kraftstoff-Luft-Gemisch verbrannt wird. Der Verbrennungsmotor 10 ist vorzugsweise wie in Figur 1 dargestellt als mittels Zündkerzen 14 fremdgezündeter Verbrennungsmotor nach dem Ottoprinzip ausgeführt. Dazu ist an jedem der Brennräume 12 mindestens eine Zündkerze 14 angeordnet, um das Kraftstoff-Luft-Gemisch zu entzünden. Ferner weisen die Brennräume 12 jeweils mindestens ein Einlassventil 52 und ein Auslassventil 56 auf, mit welchen der Gaswechsel der Brennräume 12 gesteuert werden kann. Die Einlassventile 52 und die Auslassventile 56 können in bekannter Weise über einen entsprechenden Mechanismus von einer Nockenwelle des Verbrennungsmotors 10 betätigt werden, welche in Figur 1 aus Gründen der Übersichtlichkeit nicht dargestellt ist. Der Verbrennungsmotor 10 ist über einen Einlass 16 mit einem Luftversorgungssystem 20 verbunden. Das Luftversorgungssystem 20 umfasst einen Ansaugkanal 22, in welchem in Strömungsrichtung der Frischluft durch den Ansaugkanal 22 ein Luftfilter 24, stromabwärts des Luftfilters 24 ein Verdichter 28 eines Abgasturboladers 34 und stromabwärts des Verdichters 28 eine Drosselklappe 26 angeordnet sind. Alternativ kann der Verbrennungsmotor 10 auch als Saugmotor ausgeführt werden, wobei in diesem Fall der Abgasturbolader 34 und somit der Verdichter 28 im Ansaugkanal 22 entfällt. Ferner ist eine Aufladung des Verbrennungsmotors 10 über einen mechanischen Kompressor oder einen elektrischen Verdichter möglich.

Der Verbrennungsmotor 10 ist mit seinem Auslass 18 mit einer Abgasanlage 30 verbunden. Die Abgasanlage 30 umfasst in Strömungsrichtung eines Abgases des Verbrennungsmotors 10 durch die Abgasanlage eine Turbine 36 des Abgasturboladers 34, welcher über eine Welle den Verdichter 28 in dem Ansaugkanal 22 antreibt. Stromabwärts der Turbine 36 ist ein Drei-Wege-Katalysator 38 und weiter stromabwärts ein Partikelfilter 40 angeordnet. Alternativ kann der Partikelfilter 40 auch mit einer Drei-Wege-katalytisch wirksamen Beschichtung als sogenannter Vier-Wege-Katalysator 42 ausgeführt sein. Stromabwärts der Turbine 36 und stromaufwärts des Drei-Wege-Katalysators 38 ist im Abgaskanal 32 eine erste Lambdasonde 44, vorzugsweise eine Breitbandsonde, angeordnet, um das Verbrennungsluftverhältnis im Abgas zu bestimmen. Stromabwärts des Drei-Wege-Katalysators 38 und stromaufwärts des Partikelfilters 40 ist im Abgaskanal 32 eine zweite Lambdasonde 46 vorgesehen, welche als Sprungsonde oder als Breitbandsonde ausgeführt sein kann. Ferner ist in der Abgasanlage, vorzugsweise am Partikelfilter 40 ein Temperatursensor 48 vorgesehen, mit welchem eine Abgastemperatur vor Eintritt in den Partikelfilter 40 bestimmt werden kann und auf Basis dieser eine Temperatur des Partikelfilters 40 berechnet werden kann. Ferner ist stromaufwärts des Partikelfilters 40 ein erster Drucksensor 58 und stromabwärts des Partikelfilters 40 ein zweiter Drucksensor 60 vorgesehen, mit welchem ein Differenzdruck über den Partikelfilter 40 bestimmt wird. Da die Druckdifferenz über den Partikelfilter 40 mit zunehmender Beladung des Partikelfilters 40 steigt, kann anhand dieser Druckdifferenz der Beladungszustand des Partikelfilters 40 abgeschätzt werden und ermittelt werden, wann eine Regeneration des Partikelfilters 40 notwendig ist. Alternativ kann die Beladung des Partikelfilters 40 auch über ein Beladungsmodell bestimmt werden, welches anhand der Motorparameter des Verbrennungsmotors 10 einen Rußeintrag in den Partikelfilter 40 beziehungsweise einen Rußaustrag aus dem Partikelfilter 40 berechnet und somit die Beladung des Partikelfilters 40 berechnet.

Der Verbrennungsmotor 10 ist mit einem Motorsteuergerät 50 verbunden. Das Motorsteuergerät 50 steuert die Einspritzmengen und den Einspritzzeitpunkt des Kraftstoffs in die Brennräume 12 des Verbrennungsmotors 10 sowie die Stellung der Drosselklappe 26 im Ansaugkanal 22. Ferner ist das Motorsteuergerät 50 über Signalleitungen mit den Lambdasonden 44, 46, dem Temperatursensor 48 sowie den Sensoren 58, 60 zur Differenzdruckmessung über den Partikelfilter 40 verbunden.

In Figur 2 ist ein weiteres Ausführungsbeispiel eines Verbrennungsmotors 10 mit einem Luftversorgungssystem 20 und einer Abgasanlage 30 dargestellt. Bei im Wesentlichen gleichem Aufbau wie zu Figur 1 ausgeführt ist hier am Partikelfilter 40 ein elektrisches Heizelement 54 vorgesehen, welches dem Wabenkörper des Partikelfilters 40 vorgeschaltet ist und das Abgas vor Eintritt in den Partikelfilter 40 aufheizt. Das elektrische Heizelement 54 ist vorzugsweise wie in Figur 2 dargestellt als elektrische Heizscheibe ausgebildet, welche an dem Gehäuse des Partikelfilters 40 befestigt ist. Alternativ sind jedoch auch andere Möglichkeiten von elektrischen Heizelementen 54 möglich. Insbesondere kann das Filtersubstrat des Partikelfilters 40 elektrisch leitend ausgebildet sein und durch das Anlegen einer elektrischen Spannung beheizt werden.

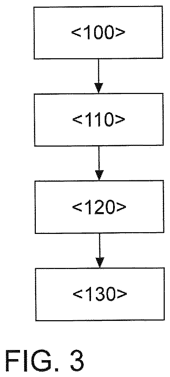

In Figur 3 ist ein Ablaufdiagramm zur Durchführung eines erfindungsgemäßen Verfahrens zur Regeneration des Partikelfilters 40 dargestellt. In einem ersten Verfahrensschritt <100> wird durch eine Differenzdruckmessung oder anhand eines im Motorsteuergerät 50 abgelegten Bilanzierungsmodells der Beladungszustand des Partikelfilters 40 ermittelt. In einem Verfahrensschritt <110> wird der Partikelfilter 40 durch innermotorische Maßnahmen oder durch zumindest ein elektrisches Heizelement 54 in der Abgasanlage 30 des Verbrennungsmotors 10 auf seine Regenerationstemperatur aufgeheizt. Hat der Partikelfilter 40 seine Regenerationstemperatur erreicht, so wird in einem Verfahrensschritt <120> die Sauerstoffmenge bestimmt, welche für eine effiziente und betriebssichere Regeneration des Partikelfilters 40 notwendig ist. In einem Verfahrensschritt <130> wird dann in einem Schubbetrieb des Verbrennungsmotors 10 die Schubluft derart angepasst, dass die Schubluftmenge an die zur Regeneration des Partikelfilters 40 notwendige Sauerstoffmenge angepasst wird. Dazu wird insbesondere die Drosselklappe 26 im Ansaugkanal 22 des Verbrennungsmotors 10 geöffnet, um die Schubluftmenge zu erhöhen. Alternativ oder zusätzlich können die Öffnungszeiten der Gaswechselventile 52, 56 der Brennräume 12 in dieser Schubphase angepasst werden, um die Luftstrom zu entdrosseln und die Schubluftmenge zu erhöhen.

### Bezugszeichenliste

- 10: Verbrennungsmotor
- 12: Brennraum
- 14: Zündkerze
- 16: Einlass
- 18: Auslass

- 20: Luftversorgungssystem
- 22: Ansaugkanal
- 24: Luftfilter
- 26: Drosselklappe
- 28: Verdichter

- 30: Abgasanlage
- 32: Abgaskanal
- 34: Abgasturbolader
- 36: Turbine
- 38: Drei-Wege-Katalysator

- 40: Partikelfilter
- 42: Vier-Wege-Katalysator
- 44: erste Lambdasonde
- 46: zweite Lambdasonde
- 48: Temperatursensor

- 50: Steuergerät
- 52: Einlassventil
- 54: elektrisches Heizelement
- 56: Auslassventil
- 58: erster Drucksensor
- 60: zweiter Drucksensor

- 100: Kraftfahrzeug

## Patentansprüche

1. Verfahren zur Regeneration eines Partikelfilters (40) in einer Abgasanlage (30) eines Verbrennungsmotors (10), wobei der Partikelfilter (40) in einer Schubphase des Verbrennungsmotors (10) regeneriert wird, umfassend folgende Schritte:
- Ermitteln eines Beladungszustands des Partikelfilters (40),
- Aufheizen des Partikelfilters (40) auf eine Regenerationstemperatur (T_{reg}), wobei die Temperatur des Partikelfilters (40) durch eine hochdynamische Messung an mehreren Messpunkten des Partikelfilters (40) ermittelt wird
- Berechnen einer Sauerstoffmenge, welche zur Regeneration des Partikelfilters (40) benötigt wird,
- Anpassen der Schubluftmenge an die zur Regeneration des Partikelfilters (40) notwendige Sauerstoffmenge,
- Erhöhen der Schubluftmenge durch ein Öffnen der Drosselklappe (26), wenn der Partikelfilter (40) eine untere Schwellentemperatur (Tsu) im Bereich von 550°C - 600°C erreicht, wobei
- die Drosselklappe (26) im Schubbetrieb so weit geöffnet wird, dass ein maximaler Rußumsatz auf dem Partikelfilter (40) erreicht wird, und
- Verringern der Schubluftmenge durch ein Schließen der Drosselklappe (26), wenn der Partikelfilter (40) eine obere Schwellentemperatur (T_{SO}) im Bereich von 800° - 900° erreicht hat.

2. Verfahren zur Regeneration eines Partikelfilters (40) nach Anspruch 1, **dadurch gekennzeichnet, dass** die Regeneration des Partikelfilters (40) in mehreren Teilschritten durchgeführt wird.

3. Verfahren zur Regeneration eines Partikelfilters (40) nach Anspruch 2, **dadurch gekennzeichnet, dass** zwischen den einzelnen Teilschritten jeweils Heizphasen für den Partikelfilter (40) vorgesehen sind.

4. Verfahren zur Regeneration eines Partikelfilters (40) nach einem der Ansprüche 2 oder 3, **dadurch gekennzeichnet, dass** der Verbrennungsmotor (10) zwischen zwei Schubphasen in einem gefeuerten Betriebspunkt betrieben wird.

5. Verfahren nach Anspruch 4, **dadurch gekennzeichnet, dass** der gefeuerte Betriebspunkt innermotorische Heizmaßnahmen umfasst.

6. Verfahren nach Anspruch 5, **dadurch gekennzeichnet, dass** die innermotorischen Heizmaßnahmen eine Zündverstellung des Zündzeitpunktes der Zündkerzen (14) in Richtung spät oder einen Lambda-Split-Betrieb umfassen.

7. Verfahren nach einem der Ansprüche 2 oder 3, **dadurch gekennzeichnet, dass** der Partikelfilter (40) ein elektrisches Heizelement (54) umfasst oder dem Partikelfilter (40) ein elektrisches Heizelement (54) vorgeschaltet ist, wobei das elektrische Heizelement (54) während der Regeneration des Partikelfilters (40) aktiviert wird, um ein Auskühlen des Partikelfilters (40) im Schubbetrieb unter eine Regenerationstemperatur (T_{reg}) zu unterbinden.

8. Kraftfahrzeug (100) mit einem Verbrennungsmotor (10) mit einem Luftversorgungssystem (20), in dem in einem Ansaugkanal (22) eine Drosselklappe (26) angeordnet ist, sowie mit einer Abgasanlage (30), in welcher ein Partikelfilter (40) angeordnet ist, sowie mit einem Motorsteuergerät (50), welches dazu eingerichtet ist, ein Verfahren nach einem der Ansprüche 1 bis 7 durchzuführen, wenn ein maschinenlesbarer Programmcode durch das Motorsteuergerät (50) ausgeführt wird.

## Claims

1. Method for regenerating a particulate filter (40) in an exhaust gas system (30) of an internal combustion engine (10), wherein the particulate filter (40) is regenerated in an overrun phase of the internal combustion engine (10), the method comprising the following steps:
- determining a load state of the particulate filter (40),
- heating the particulate filter (40) to a regeneration temperature (T_{reg}), wherein the temperature of the particulate filter (40) is determined by a highly dynamic measurement at a plurality of measuring points of the particulate filter (40)
- calculating an amount of oxygen required for regenerating the particulate filter (40),
- adjusting the amount of overrun air to the amount of oxygen necessary for regenerating the particulate filter (40),
- increasing the amount of overrun air by opening the throttle valve (26) when the particulate filter (40) reaches a lower threshold temperature (Tsu) in the range of 550°C - 600°C, wherein
- the throttle valve (26) is opened in the overrun mode to such an extent that a maximum soot conversion on the particulate filter (40) is achieved, and
- decreasing the amount of overrun air by closing the throttle valve (26) when the particulate filter (40) reaches an upper threshold temperature (Tso) in the range of 800° - 900°.

2. Method for regenerating a particulate filter (40) according to claim 1, **characterized in that** the regeneration of the particulate filter (40) is carried out in a plurality of sub-steps.

3. Method for regenerating a particulate filter (40) according to claim 2, **characterized in that** heating phases for the particulate filter (40) are provided between each of the individual sub-steps.

4. Method for regenerating a particulate filter (40) according to either claim 2 or claim 3, **characterized in that** the internal combustion engine (10) is operated between two overrun phases at a fired operating point.

5. Method according to claim 4, **characterized in that** the fired operating point comprises engine-internal heating measures.

6. Method according to claim 5, **characterized in that** the engine-internal heating measures include late ignition adjustment of the ignition timing of the spark plugs (14) or a lambda splitting operation.

7. Method according to either claim 2 or claim 3, **characterized in that** the particulate filter (40) comprises an electrical heating element (54) or an electrical heating element (54) is connected upstream of the particulate filter (40), the electrical heating element (54) being activated during the regeneration of the particulate filter (40) in order to cool the particulate filter (40) in the overrun mode below a regeneration temperature (T_{reg}).

8. Motor vehicle (100) comprising an internal combustion engine (10) that has an air supply system (20) in which a throttle valve (26) is arranged in an intake channel (22), and comprising an exhaust gas system (30) in which a particulate filter (40) is arranged, and comprising an engine control unit (50) which is designed to carry out a method according to any of claims 1 to 7 when a machine-readable program code is executed by the engine control unit (50).

## Revendications

1. Procédé de régénération d'un filtre à particules (40) dans un système d'échappement (30) d'un moteur à combustion interne (10), dans lequel le filtre à particules (40) est régénéré dans une phase de poussée du moteur à combustion interne (10), comprenant les étapes suivantes :
- détermination d'un état de chargement du filtre à particules (40),
- chauffage du filtre à particules (40) jusqu'à une température de régénération (T_{reg}), dans lequel la température du filtre à particules (40) est déterminée par une mesure à haute dynamique au niveau de plusieurs points de mesure du filtre à particules (40)
- calcul d'une quantité d'oxygène, qui est nécessaire pour la régénération du filtre à particules (40),
- adaptation de la quantité d'air de poussée à la quantité d'oxygène nécessaire pour la régénération du filtre à particules (40),
- augmentation de la quantité d'air de poussée par une ouverture du clapet d'étranglement (26), lorsque le filtre à particules (40) atteint une température seuil inférieure (Tsu) dans la plage de 550 °C à 600 °C, dans lequel
- le clapet d'étranglement (26) est suffisamment ouvert dans le fonctionnement de poussée pour atteindre une formation de suie maximale sur le filtre à particules (40) et
- réduction de la quantité d'air de poussée par une fermeture du clapet d'étranglement (26), lorsque le filtre à particules (40) atteint une température seuil supérieure (Tso) dans la plage de 800 °C à 900 °C.

2. Procédé de régénération d'un filtre à particules (40) selon la
revendication 1, **caractérisé en ce que** la régénération du filtre à particules (40) est réalisée en plusieurs étapes partielles.

3. Procédé de régénération d'un filtre à particules (40) selon la
revendication 2, **caractérisé en ce que,** entre les étapes partielles individuelles, respectivement, des phases de chauffage sont prévues pour le filtre à particules (40).

4. Procédé de régénération d'un filtre à particules (40) selon l'une des revendications 2 ou 3, **caractérisé en ce que** le moteur à combustion interne (10) est exploité entre deux phases de poussée dans un point de fonctionnement à la flamme.

5. Procédé selon la revendication 4, **caractérisé en ce que** le point de fonctionnement à la flamme comprend des mesures de chauffage internes au moteur.

6. Procédé selon la revendication 5, **caractérisé en ce que** les mesures de chauffage internes au moteur comprennent un réglage d'allumage du moment d'allumage des bougies d'allumage (14) en direction d'un retard ou d'un fonctionnement en cascade lambda.

7. Procédé selon l'une des revendications 2 ou 3, **caractérisé en ce que** le filtre à particules (40) comprend un élément de chauffage électrique (54) ou un élément de chauffage électrique (54) est connecté en amont du filtre à particules (40), dans lequel l'élément de chauffage électrique (54) est activé pendant la régénération du filtre à particules (40), afin d'éviter un refroidissement du filtre à particules (40) dans le fonctionnement de poussée en dessous d'une température de régénération (T_{reg}).

8. Véhicule automobile (100) comportant un moteur à combustion
interne (10) comportant un système d'alimentation en air (20), dans lequel, dans un canal d'aspiration (22) est agencé un clapet d'étranglement (26), et comportant également un système d'échappement (30), dans lequel un filtre à particules (40) est agencé, comportant également un appareil de commande de moteur (50), qui est conçu pour réaliser un procédé selon l'une des revendications 1 à 7, lorsqu'un code de programme lisible par machine est exécuté par l'appareil de commande de moteur (50).
